(19) Europäisches Patentamt
European Patent Office
Office européen des brevets

(11) Veröffentlichungsnummer: **0 611 808 A2**

# (12) EUROPÄISCHE PATENTANMELDUNG

(21) Anmeldenummer: **94102026.5**

(22) Anmeldetag: **10.02.94**

(51) Int. Cl.5: **C09B 67/22**, D06P 1/18, //C09B29/039,C09B29/085

(30) Priorität: **17.02.93 DE 4304744**

(43) Veröffentlichungstag der Anmeldung: **24.08.94 Patentblatt 94/34**

(84) Benannte Vertragsstaaten: **CH DE FR GB IT LI**

(71) Anmelder: **BASF Aktiengesellschaft**
**Carl-Bosch-Strasse 38**
**D-67063 Ludwigshafen (DE)**

(72) Erfinder: **Lange, Arno, Dr.**
**Oberes Gaistal 3b**
**D-67098 Bad Duerkheim (DE)**
Erfinder: **Nahr, Uwe, Dr.**
**In den Pfuetzen 19**
**D-67125 Dannstadt-Schauernheim (DE)**
Erfinder: **Siber, Walter**
**Laerchenweg 12**
**D-55218 Ingelheim (DE)**
Erfinder: **Walther, Volker**
**Haardtstrasse 15a**
**D-67256 Weisenheim (DE)**

(54) **Mischungen von Azofarbstoffen für marineblaue bis schwarze Farbtöne.**

(57) Farbstoffmischungen, enthaltend
a) einen oder mehrerer Azofarbstoffe der Formel I

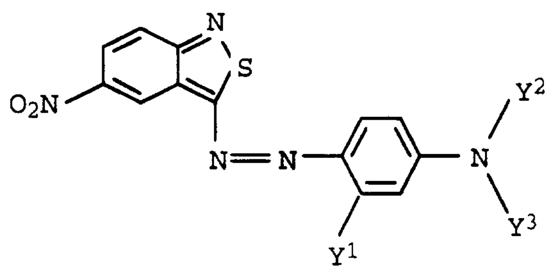

(I),

in der

$Y^1$ Wasserstoff, $C_1$-$C_6$-Alkyl, $C_1$-$C_4$-Alkoxy, gegebenenfalls substituiertes $C_1$-$C_8$-Alkanoylamino oder $C_3$-$C_4$-Alkenoylamino und

$Y^2$ und $Y^3$ Wasserstoff oder gegebenenfalls substituiertes $C_1$-$C_6$-Alkyl bedeuten,

b) den Azofarbstoff der Formel II

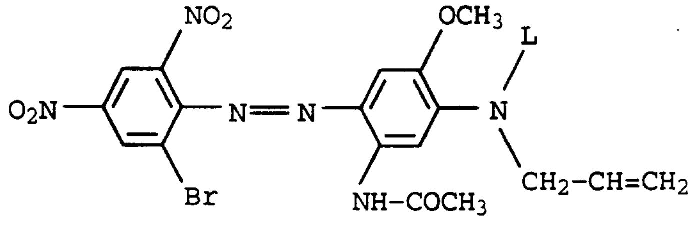

(II),

EP 0 611 808 A2

worin L für Allyl oder gegebenenfalls auch für Wasserstoff steht, sowie
c) gegebenenfalls einen Azofarbstoff der Formel III und/oder IV

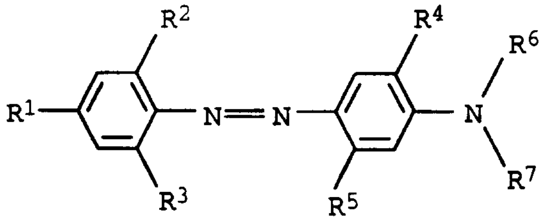

(III)

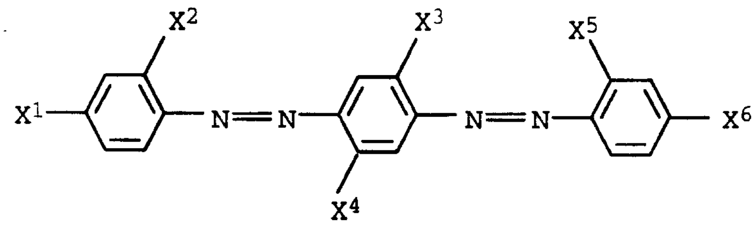

(IV),

worin

| | |
|---|---|
| $R^1$ | Nitro oder gegebenenfalls substituiertes $C_1$-$C_4$-Alkylsulfonyl, |
| $R^2$ und $R^3$ | Wasserstoff, Chlor oder Brom, |
| $R^4$ und $R^5$ | Wasserstoff oder Chlor, |
| $R^6$ und $R^7$ | Wasserstoff, Phenyl oder gegebenenfalls substituiertes $C_1$-$C_4$-Alkyl, |
| $X^1$ | Wasserstoff, Hydroxy, Methoxy, Acetylamino oder Nitro, |
| $X^2$, $X^3$, $X^4$ und $X^5$ | Wasserstoff, Methyl oder Methoxy und |
| $X^5$ | Hydroxy, 2-Hydroxyethoxy, Formyl oder Methoxycarbonylamino bedeuten, |

Farbstoffzubereitungen, enthaltend die neuen Farbstoffmischungen, sowie die Verwendung der neuen Farbstoffmischungen zum Färben oder Bedrucken von Polyester enthaltenden Substraten in textiler Form.

Die vorliegende Erfindung betrifft neue Farbstoffmischungen, enthaltend, jeweils bezogen auf das Gesamtgewicht der Farbstoffe,

a) 10 bis 90 Gew.-% eines oder mehrerer Azofarbstoffe der Formel I

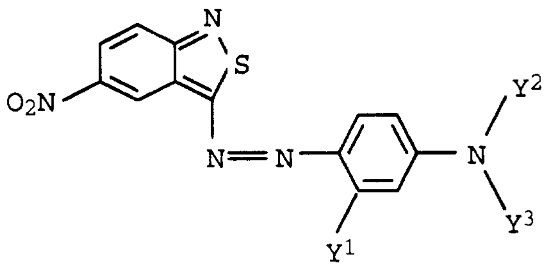

(I),

in der

$Y^1$ Wasserstoff, $C_1$-$C_6$-Alkyl, $C_1$-$C_4$-Alkoxy, gegebenenfalls durch Halogen, Cyano, Hydroxy, $C_1$-$C_4$-Alkoxy oder $C_1$-$C_4$-Alkanoyloxy substituiertes $C_1$-$C_8$-Alkanoylamino oder $C_3$-$C_4$-Alkenoylamino und

$Y^2$ und $Y^3$ unabhängig voneinander jeweils Wasserstoff oder $C_1$-$C_6$-Alkyl, das gegebenenfalls durch Hydroxy, $C_1$-$C_4$-Alkoxy, $C_1$-$C_4$-Alkanoyloxy oder $C_1$-$C_4$-Alkoxycarbonyl substituiert ist, bedeuten,

b) 10 bis 90 Gew.-% des Azofarbstoffs der Formel IIa

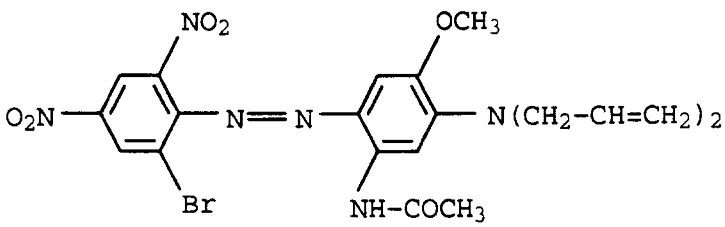

(IIa)

und gegebenenfalls des Farbstoffs der Formel IIb

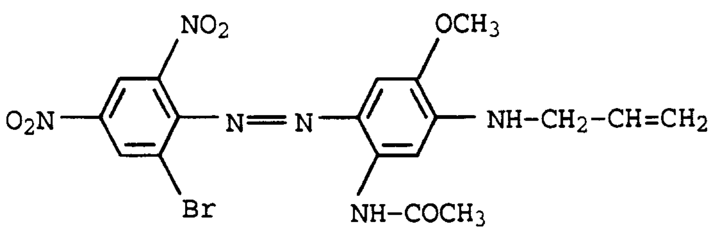

(IIb),

wobei der Anteil an Farbstoff IIa 50 bis 100 Gew.-% und an Farbstoff IIb 0 bis 50 Gew.-% beträgt, jeweils bezogen auf das Gewicht an Farbstoff IIa und IIb,
sowie

c) 0 bis 70 Gew.-% eines oder mehrerer Azofarbstoffe der Formel III oder IV

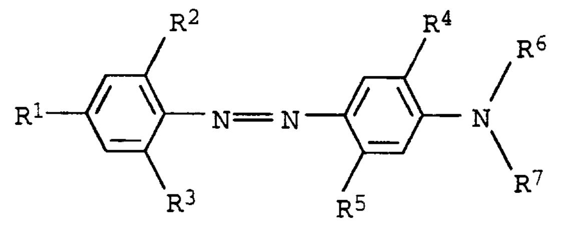 (III)

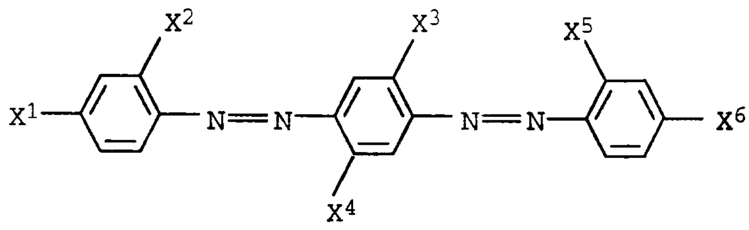 (IV),

worin

$R^1$ Nitro oder $C_1$-$C_4$-Alkylsulfonyl, das gegebenenfalls durch Hydroxy substituiert ist,

$R^2$ und $R^3$ unabhängig voneinander jeweils Wasserstoff, Chlor oder Brom,

$R^4$ und $R^5$ unabhängig voneinander jeweils Wasserstoff oder Chlor,

$R^6$ und $R^7$ unabhängig voneinander jeweils Wasserstoff, Phenyl oder $C_1$-$C_4$-Alkyl, das gegebenenfalls durch Hydroxy, Phenoxy, 2-Cyanoethoxy, Acetyloxy, Phenoxacetyloxy, Benzoyloxy, Methoxycarbonyloxy oder Phenylaminocarbonyloxy substituiert ist, oder, wenn $R^2$ und $R^3$ jeweils für Wasserstoff oder Chlor stehen, auch $C_1$-$C_4$-Cyanoalkyl,

$X^1$ Wasserstoff, Hydroxy, Methoxy, Acetylamino oder Nitro,

$X^2$, $X^3$, $X^4$ und $X^5$ unabhängig voneinander jeweils Wasserstoff, Methyl oder Methoxy und

$X^5$ Hydroxy, 2-Hydroxyethoxy, Formyl oder Methoxycarbonylamino bedeuten,

mit der Maßgabe, daß die Summe der unter a), b) und c) genannten Farbstoffe 100 Gew.-% ergibt,

Farbstoffzubereitungen, enthaltend die neuen Farbstoffmischungen, sowie die Verwendung der neuen Farbstoffmischungen zum Färben oder Bedrucken von Polyester enthaltenden Substraten in textiler Form.

Aus der JP-A-26060/1985 und der US-A-4 405 330 sind Farbstoffmischungen bekannt, die u.a. den Farbstoff der obengenannten Formel IIa enthalten. Es hat sich jedoch gezeigt, daß diese Farbstoffmischungen bei ihrer Anwendung noch Mängel aufweisen.

Aufgabe der vorliegenden Erfindung war es nun, neue Farbstoffmischungen bereitzustellen, die ebenfalls den Farbstoff der Formel IIa enthalten. Die neuen Mischungen sollten bei ihrer Anwendung marineblaue bis schwarze Farbtöne ergeben und sollten über gute anwendungstechnische Eigenschaften verfügen.

Demgemäß wurden die eingangs näher bezeichneten Farbstoffmischungen gefunden.

Alle in den Formeln I, III und IV auftretenden Alkyl- und Alkenylgruppen können sowohl geradkettig als auch verzweigt sein.

Wenn die Alkylreste Substituenten tragen, so sind sie in der Regel 1- oder 2-fach substituiert.

Reste $Y^1$, $Y^2$ und $Y^3$ sind z.B. Methyl, Ethyl, Propyl, Isopropyl, Butyl, Isobutyl, sec-Butyl, tert-Butyl, Pentyl, Neopentyl, tert-Pentyl, Hexyl oder Methylpentyl.

Reste $Y^1$ sind weiterhin z.B. Acetylamino, Propionylamino, Butyrylamino, Isobutyrylamino, 2-Ethylhexanoylamino, Methoxyacetylamino, Ethoxyacetylamino, 2- oder 3-Methoxypropionylamino, Chloracetylamino, Cyanoacetylamino, Hydroxyacetylamino, Acetyloxyacetylamino, Acroylamino oder Methacroylamino.

Reste $Y^2$ und $Y^3$ sind weiterhin z.B. 2-Hydroxyethyl, 2- oder 3-Hydroxypropyl, 2- oder 4-Hydroxybutyl, 2-Methoxyethyl, 2-Ethoxyethyl, 2- oder 3-Methoxypropyl, 2- oder 3-Ethoxypropyl, 2- oder 4-Methoxybutyl, 2- oder 4-Ethoxybutyl, 2-Acetyloxyethyl, 2- oder 3-Acetyloxypropyl, 2-Methoxycarbonylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 4-Methoxycarbonylbutyl oder 2- oder 4-Ethoxycarbonylbutyl.

Reste $R^1$ sind z.B. Methylsulfonyl, Ethylsulfonyl, Propylsulfonyl, Isopropylsulfonyl, Butylsulfonyl oder 2-Hydroxyethylsulfonyl.

Reste $R^6$ und $R^7$ sind z.B. Methyl, Ethyl, Propyl, Isopropyl, Butyl, Isobutyl, sec-Butyl, 2-Hydroxyethyl, 2- oder 3-Hydroxypropyl, 2- oder 4-Hydroxybutyl, 2-Phenoxyethyl, 2- oder 3-Phenoxypropyl, 2-(2-Cyanoethoxy)ethyl, 2-Acetyloxyethyl, 2-Phenoxyacetyloxyethyl, 2-Benzoyloxyethyl, 2-Methylcarbonyloxyethyl, 2-Phenylaminocarbonyloxyethyl oder 2-Cyanoethyl.

Bevorzugt sind Farbstoffmischungen, enthaltend mindestens einen Azofarbstoff der Formel III oder IV, worin

| | |
|---|---|
| $R^1$ | Nitro, |
| $R^2$ und $R^3$ | jeweils Wasserstoff oder jeweils Chlor, |
| $R^4$ | Wasserstoff, Chlor oder Methyl, |
| $R^5$ | Wasserstoff und |
| $R^6$ und $R^7$ | unabhängig voneinander Wasserstoff, Phenyl, $C_1$-$C_4$-Alkyl oder durch Hydroxy, Phenoxy, 2-Cyanoethoxy, Acetyloxy, Phenoxyacetyloxy, Benzoyloxy, Methoxycarbonyloxy, Phenylaminocarbonyloxy oder Cyano substituiertes Ethyl |

bedeuten und $X^1$, $X^2$, $X^3$, $X^4$, $X^5$ und $X^5$ jeweils die obengenannte Bedeutung besitzen.

Hervorzuheben sind Mischungen, enthaltend mindestens einen Azofarbstoff der Formel III oder IV, wobei diese Azofarbstoffe folgendes Substituentenmuster aufweisen.

Farbstoffe der Formel III:

| | $R^1$ | $R^2$ | $R^3$ | $R^4$ | $R^5$ | $R^6$ | $R^7$ |
|---|---|---|---|---|---|---|---|
| a) | $NO_2$ | H | H | H | H | H | H |
| b) | $NO_2$ | H | H | H | H | $CH_3$ | $NCC_2H_4$ |
| c) | $NO_2$ | H | H | H | H | $C_2H_5$ | $NCC_2H_4$ |
| d) | $NO_2$ | H | H | H | H | $C_4H_9$ | $NCC_2H_4$ |
| e) | $NO_2$ | H | H | H | H | $CH_3COOC_2H_4$ | $NCC_2H_4$ |
| f) | $NO_2$ | H | H | H | H | $C_6H_5$ | H |
| g) | $NO_2$ | H | H | $CH_3$ | H | $HOC_2H_4$ | H |
| h) | $NO_2$ | Cl | Cl | H | H | $CH_3$ | $HOC_2H_4$ |
| i) | $NO_2$ | Cl | Cl | H | H | $HOC_2H_4$ | $HOC_2H_4$ |
| j) | $NO_2$ | Cl | Cl | H | H | $HOC_2H_4$ | $C_2H_5$ |
| k) | $NO_2$ | Cl | Cl | H | H | $CH_3COOC_2H_4$ | $NCC_2H_4$ |
| l) | $NO_2$ | H | H | H | H | $C_6H_5NHCOOC_2H_4$ | $NCC_2H_4$ |
| m) | $NO_2$ | H | H | H | H | $C_6H_5OCH_2COOC_2H_4$ | $NCC_2H_4$ |
| n) | $NO_2$ | H | H | Cl | H | H | $HOC_2H_4OH$ |
| o) | $NO_2$ | H | H | Cl | H | $CH_3COOC_2H_4$ | $CH_3COOC_2H_4$ |
| p) | $NO_2$ | Cl | Cl | H | H | $HOC_2H_4$ | $NCC_2H_4$ |
| q) | $NO_2$ | Cl | Cl | H | H | $C_6H_5OCOC_2H_4$ | $NCC_2H_4$ |
| r) | $NO_2$ | H | H | H | H | $CH_3COOC_2H_4$ | $CH_3COOC_2H_4$ |

| | $R^1$ | $R^2$ | $R^3$ | $R^4$ | $R^5$ | $R^6$ | $R^7$ |
|---|---|---|---|---|---|---|---|
| s) | $NO_2$ | Cl | Cl | Cl | H | H | $NCC_2H_4$ |
| t) | $NO_2$ | Cl | Cl | H | H | $CH_3OCOOC_2H_4$ | $CH_3OCOOC_2H_4$ |
| u) | $NO_2$ | Cl | Cl | H | H | $CH_3COOC_2H_4$ | $CH_3COOC_2H_4$ |
| v) | $NO_2$ | H | H | H | H | $NCC_2H_4OC_2H_4$ | $NCC_2H_4$ |
| w) | $NO_2$ | H | H | H | H | $C_6H_5OCOC_2H_4$ | $NCC_2H_4$ |
| x) | $NO_2$ | Cl | Cl | Cl | H | $C_6H_5OC_2H_4$ | $NCC_2H_4$ |
| y) | $HOC_2H_4SO_2$ | Cl | Cl | H | Cl | $C_2H_5$ | $C_2H_5$ |

Farbstoffe der Formel IV:

| | $X^1$ | $X^2$ | $X^3$ | $X^4$ | $X^5$ | $X^6$ |
|---|---|---|---|---|---|---|
| a) | $NO_2$ | H | H | H | H | HO |
| b) | $NO_2$ | H | $CH_3O$ | H | H | HO |
| c) | $NO_2$ | H | $CH_3O$ | $CH_3$ | H | HO |
| d) | H | H | $CH_3O$ | $CH_3O$ | H | HO |
| e) | HO | H | $CH_3$ | H | H | CHO |
| f) | HO | H | $CH_3$ | $CH_3O$ | H | $HOC_2H_4O$ |
| g) | HO | $CH_3$ | H | H | $CH_3$ | HO |
| h) | H | H | $CH_3O$ | $CH_3$ | H | HO |
| i) | HO | H | $CH_3$ | H | H | $CH_3OCONH$ |
| j) | $CH_3O$ | H | H | $CH_3$ | H | HO |

| | $X^1$ | $X^2$ | $X^3$ | $X^4$ | $X^5$ | $X^6$ |
|---|---|---|---|---|---|---|
| k) | $CH_3OCONH$ | H | H | $CH_3$ | H | HO |
| l) | $NO_2$ | H | $CH_3$ | $CH_3$ | H | $OC_2H_4O$ |

Besonders hervorzuheben sind Mischungen, enthaltend mindestens einen Azofarbstoff der Formel IIId, IIIk oder IVb.

Vorteilhafte Farbstoffmischungen sind solche, die 70 bis 90 Gew.-% des Farbstoffs der Formel IIa und 10 bis 30 Gew.-% des Farbstoffs der Formel IIb, jeweils bezogen auf das Gewicht an Farbstoff IIa und IIb, aufweisen.

Besonders farbstark sind Farbstoffmischungen, die einen oder mehrere Farbstoffe der Formel I enthalten, worin $Y^1$ Wasserstoff oder Methyl bedeutet.

Besonders farbstarke Farstoffmischungen sind weiterhin solche, die einen Farbstoff der Formel I enthalten, worin $Y^2$ und $Y^3$ unabhängig voneinander jeweils $C_1$-$C_4$-Alkyl, das gegebenenfalls durch Hydroxy oder $C_1$-$C_4$-Alkoxycarbonyl substituiert ist, bedeuten.

Farbstoffmischungen für schwarze Farbtöne enthalten insbesondere, jeweils bezogen auf das Gesamtgewicht der Farbstoffe, a) 15 bis 60 Gew.-% mindestens eines Azofarbstoffs der Formel I, b) 15 bis 60 Gew.-% des Azofarbstoffs der Formel IIa und gegebenenfalls der Formel IIb sowie c) 35 bis 65 Gew.-% mindestens eines Azofarbstoffs der Formel III oder IV, mit der Maßgabe, daß die Summe der unter a), b) und c) genannten Farbstoffe 100 Gew.-% ergibt.

Farbstoffmischungen für marineblaue Farbtöne enthalten insbesondere, jeweils bezogen auf das Gewicht der Farbstoffe, a) 17 bis 80 Gew.-% mindestens eines Azofarbstoffs der Formel I, b) 17 bis 80 Gew.-% des Azofarbstoffs der Formel IIa und gegebenenfalls der Formel IIb sowie c) 3 bis 20 Gew.-% mindestens eines Azofarbstoffs der Formel III oder IV, mit der Maßgabe, daß die Summe der unter a), b) und c) genannten Farbstoffe 100 Gew.-% ergibt.

Bei den Farbstoffen der Formel I, IIa, IIb, III und IV handelt es sich im allgemeinen um bekannte Farbstoffe. Sie sind z.B. aus der US-A-3 981 883, DE-A-3 112 427, EP-A-64 221 oder aus Venkataraman "The Chemistry of Synthetic Dyes", Vol. III, Seiten 444 bis 447, bekannt oder können nach den dort genannten Methoden erhalten werden.

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Dispergiermittel, wie Ligninsulfonate oder Sulfonierungsprodukte des Reaktionsprodukts von Formaldehyd mit Aromaten, oder andere Hilfsstoffe, zugesetzt werden. Es ist auch möglich, bereits fertige Farbstoffpräparationen der jeweiligen Partner oder fertige Farbstoffpräparationen mit reinen Farbstoffen abzumischen.

Demgemäß betrifft die vorliegende Erfindung weiterhin Farbstoffzubereitungen, enthaltend 15 bis 60 Gew.-%, bezogen auf das Gewicht der Farbstoffzubereitung, einer eingangs näher bezeichneten Farbstoffmischung sowie 40 bis 85 Gew.-%, bezogen auf das Gewicht der Farbstoffpräparation, Dispergiermittel.

Die neuen Farbstoffmischungen eignen sich zum Färben oder Bedrucken von Polyester enthaltenden Substraten in textiler Form. Erfindungsgemäß sind darunter textile Formen, wie Fasern, Gewirke oder Gewebe aus Polyester oder Mischgewebe von Polyestern mit Baumwolle, Wolle, Celluloseacetat oder Triacetat zu verstehen, wobei Polyester-Wolle-Mischungen hervorzuheben sind. Man erhält Ausfärbungen oder Drucke in marineblauen bis schwarzen Farbtönen. Die Färbe- und Druckverfahren sind an sich bekannt. Nähere Einzelheiten können auch den Beispielen entnommen werden.

Die erfindungsgemäßen Farbstoffmischungen ergeben farbstarke Färbungen und verfügen über eine neutrale Abendfarbe. Außerdem weisen sie ausgezeichnete Produktionseigenschaften auf.

Die folgenden Beispiele sollen die Erfindung näher erläutern.

Färbevorschrift für Polyester:

10 g Polyestergewebe werden bei einer Temperatur von 50 °C in 200 ml einer Färbeflotte gegeben, die X Gew.-%, bezogen auf das Polyestergewebe, einer Farbstoffpräparation enthält und deren pH-Wert mittels Essigsäure auf 4,5 eingestellt ist. Man behandelt 5 Minuten bei 50 °C, steigert dann die Temperatur der Flotte innerhalb von 30 Minuten auf 130 °C, hält 60 Minuten bei dieser Temperatur und läßt dann innerhalb von 20 Minuten auf 60 °C abkühlen.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65 °C behandelt. Schließlich wird das Gewebe gespült, mit verdünnter Essigsäure neutralisiert, nochmals gespült und getrocknet.

Färbevorschrift für Polyester-Wolle-Mischungen:

Die Färbung wird analog der voranstehenden Vorschrift für Polyester vorgenommen, jedoch wird maximal auf 120 °C erhitzt und nur 30 Minuten bei dieser Temperatur gehalten. (Zum Schutz der Wolle kann auch Formaldehyd oder ein Formaldehyd abspaltendes Agens zugesetzt werden.)
Die obengenannte Farbstoffpräparation enthielt jeweils 40 Gew.-% an Farbstoffmischung sowie 60 Gew.-% eines Dispergiermittels auf Basis von Ligninsulfonat, jeweils bezogen auf das Gewicht der Präparation.

Die Farbstoffmischung setzte sich dabei wie in der folgenden Tabelle angegeben zusammen, wobei folgende Farbstoffe verwendet wurden.

Farbstoff 1

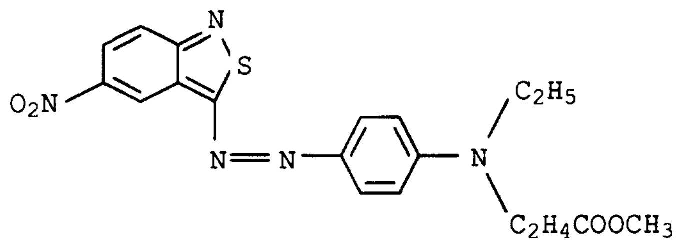

Farbstoff 2

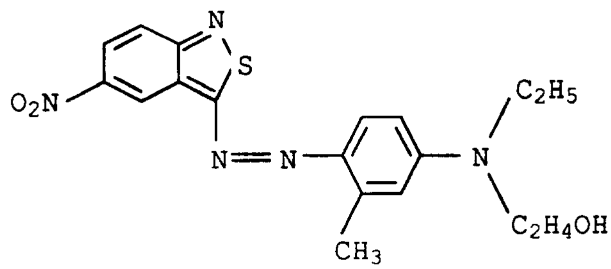

Farbstoff 3

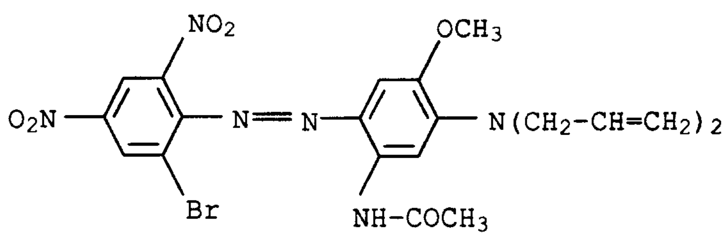

Farbstoff 4

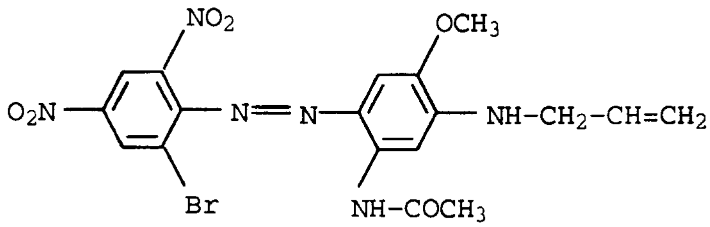

Farbstoff 5

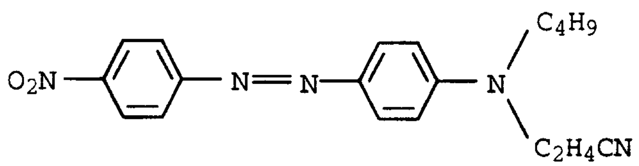

Farbstoff 6

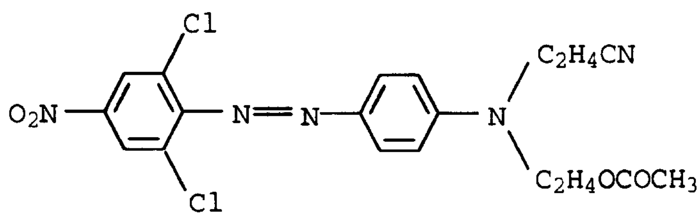

Farbstoff 7

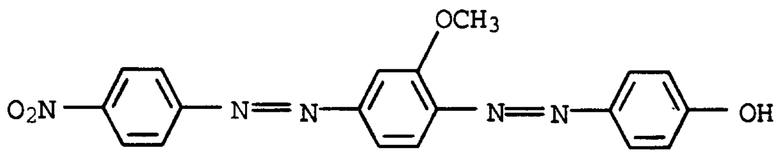

| Bsp. Nr. | Farbstoff Nr. | | | | | | | Menge X an Farbstoffpräparation [Gew.-%] |
|---|---|---|---|---|---|---|---|---|
| | 1 | 2 | 3 | 4 | 5 | 6 | 7 | |
| | [Gew.-%, bezogen auf das Gewicht der Farbstoffmischung] | | | | | | | |
| 1 | 19 | 0 | 33 | 0 | 48 | 0 | 0 | 2,8 |
| 2 | 0 | 20 | 34 | 0 | 46 | 0 | 0 | 2,9 |
| 3 | 10 | 10 | 33 | 0 | 47 | 0 | 0 | 2,7 |
| 4 | 19 | 0 | 28 | 5 | 48 | 0 | 0 | 2,5 |
| 5 | 0 | 20 | 25 | 9 | 46 | 0 | 0 | 3,0 |
| 6 | 20 | 0 | 25 | 0 | 0 | 55 | 0 | 2,9 |
| 7 | 0 | 24 | 21 | 0 | 0 | 55 | 0 | 2,7 |
| 8 | 30 | 0 | 28 | 0 | 0 | 0 | 42 | 2,6 |
| 9 | 0 | 32 | 28 | 0 | 0 | 0 | 40 | 2,5 |
| 10 | 38 | 0 | 53 | 0 | 10 | 0 | 0 | 1,7 |
| 11 | 0 | 36 | 54 | 0 | 9 | 0 | 0 | 1,6 |
| 12 | 18 | 20 | 53 | 0 | 9 | 0 | 0 | 1,6 |
| 13 | 38 | 0 | 45 | 8 | 10 | 0 | 0 | 1,5 |
| 14 | 0 | 36 | 40 | 14 | 9 | 0 | 0 | 1,9 |
| 15 | 49 | 0 | 40 | 0 | 0 | 11 | 0 | 1,8 |
| 16 | 0 | 55 | 34 | 0 | 0 | 11 | 0 | 1,8 |
| 17 | 40 | 0 | 52 | 0 | 0 | 0 | 8 | 1,9 |
| 18 | 0 | 44 | 48 | 0 | 0 | 0 | 8 | 1,9 |

Sowohl auf Polyestergewebe wie auch auf Polyester-Wolle-Mischgewebe (55:45 w/w) erhielt man mit den Mischungen der Beispiele 1 bis 9 jeweils farbstarke schwarze Färbungen, mit denen der Beispiele 10 bis 18 jeweils farbstarke marineblaue Färbungen.

## Patentansprüche

**1.** Farbstoffmischungen, enthaltend, jeweils bezogen auf das Gesamtgewicht der Farbstoffe,
a) 10 bis 90 Gew.-% eines oder mehrerer Azofarbstoffe der Formel I

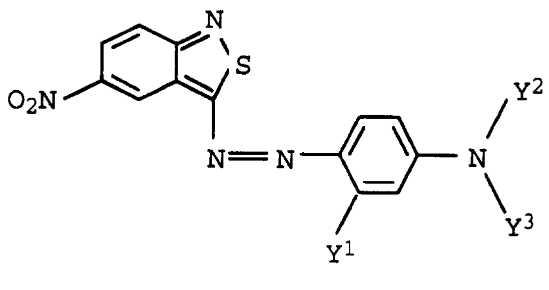

(I),

$Y^1$ in der Wasserstoff, $C_1$-$C_6$-Alkyl, $C_1$-$C_4$-Alkoxy, gegebenenfalls durch Halogen, Cyano, Hydroxy, $C_1$-$C_4$-Alkoxy oder $C_1$-$C_4$-Alkanoyloxy substituiertes $C_1$-$C_8$-Alkanoylamino oder $C_3$-$C_4$-Alkenoylamino und

$Y^2$ und $Y^3$ unabhängig voneinander jeweils Wasserstoff oder $C_1$-$C_6$-Alkyl, das gegebenenfalls durch Hydroxy, $C_1$-$C_4$-Alkoxy, $C_1$-$C_4$-Alkanoyloxy oder $C_1$-$C_4$-Alkoxycarbonyl substituiert ist, bedeuten,

b) 10 bis 90 Gew.-% des Azofarbstoffs der Formel IIa

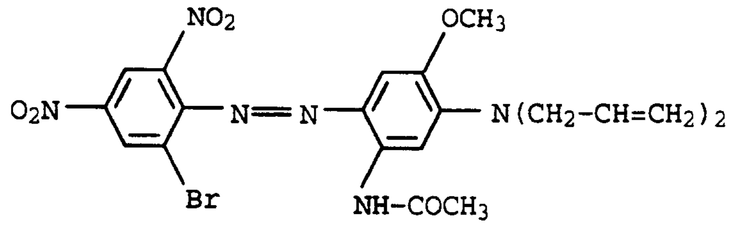

(IIa)

und gegebenenfalls des Farbstoffs der Formel IIb

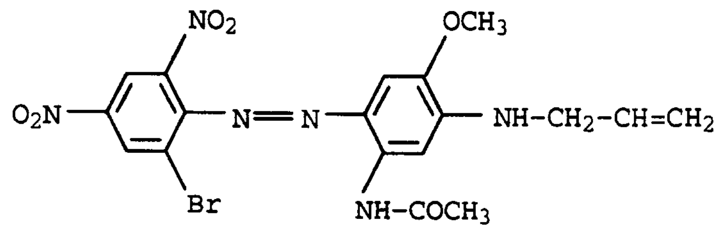

(IIb),

wobei der Anteil an Farbstoff IIa 50 bis 100 Gew.-% und an Farbstoff IIb 0 bis 50 Gew.-% beträgt, jeweils bezogen auf das Gewicht an Farbstoff IIa und IIb,
sowie

c) 0 bis 70 Gew.-% eines oder mehrerer Azofarbstoffe der Formel III oder IV

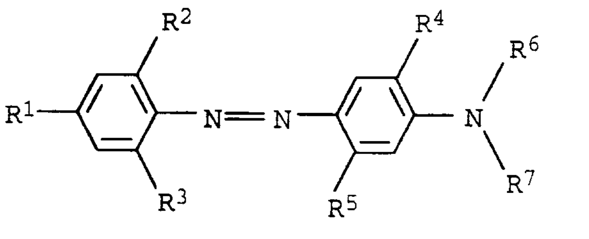

(III)

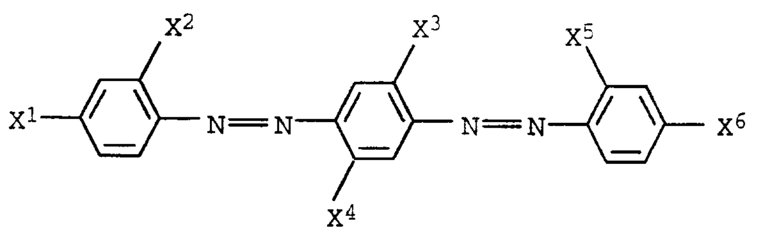

(IV),

worin

$R^1$ Nitro oder $C_1$-$C_4$-Alkylsulfonyl, das gegebenenfalls durch Hydroxy substituiert ist,

$R^2$ und $R^3$ unabhängig voneinander jeweils Wasserstoff, Chlor oder Brom,

$R^4$ und $R^5$ unabhängig voneinander jeweils Wasserstoff oder Chlor,

$R^6$ und $R^7$ unabhängig voneinander jeweils Wasserstoff, Phenyl oder $C_1$-$C_4$-Alkyl, das gegebenenfalls durch Hydroxy, Phenoxy, 2-Cyanoethoxy, Acetyloxy, Phenoxyacetyloxy, Benzoyloxy, Methoxycarbonyloxy oder Phenylaminocarbonyloxy substituiert ist, oder, wenn $R^2$ und $R^3$ jeweils für Wasserstoff oder

Chlor stehen, auch $C_1$-$C_4$-Cyanoalkyl,

$X^1$ Wasserstoff, Hydroxy, Methoxy, Acetylamino oder Nitro,

$X^2$, $X^3$, $X^4$ und $X^5$ unabhängig voneinander jeweils Wasserstoff, Methyl oder Methoxy und

$X^5$ Hydroxy, 2-Hydroxyethoxy, Formyl oder Methoxycarbonylamino bedeuten,

mit der Maßgabe, daß die Summe der unter a), b) und c) genannten Farbstoffe 100 Gew.-% ergibt.

**2.** Farbstoffmischungen nach Anspruch 1, enthaltend mindestens einen Azofarbstoff der Formel III oder IV, worin

$R^1$ Nitro,

$R^2$ und $R^3$ jeweils Wasserstoff oder jeweils Chlor,

$R^4$ Wasserstoff, Chlor oder Methyl,

$R^5$ Wasserstoff und

$R^6$ und $R^7$ unabhängig voneinander Wasserstoff, Phenyl, $C_1$-$C_4$-Alkyl oder durch Hydroxy, Phenoxy, 2-Cyanoethoxy, Acetyloxy, Phenoxyacetyloxy, Benzoyloxy, Methoxycarbonyloxy, Phenylaminocarbonyloxy oder Cyano substituiertes Ethyl

bedeuten und $X^1$, $X^2$, $X^3$, $X^4$, $X^5$ und $X^5$ jeweils die in Anspruch 1 genannte Bedeutung besitzen.

**3.** Farbstoffmischungen nach Anspruch 1, enthaltend mindestens einen Azofarbstoff der Formel I, worin $Y^1$ Wasserstoff oder Methyl bedeutet.

**4.** Farbstoffzubereitungen, enthaltend 15 bis 60 Gew.-%, bezogen auf das Gewicht der Farbstoffzubereitung, einer Farbstoffmischung gemaß Anspruch 1 sowie 40 bis 85 Gew.-%, bezogen auf das Gewicht der Farbstoffzubereitungen, Dispergiermittel.

**5.** Verwendung der Farbstoffmischungen gemäß Anspruch 1 zum Färben oder Bedrucken von Polyester enthaltenden Substraten in textiler Form.

**6.** Verwendung der Farbstoffmischungen gemäß Anspruch 1 zum Färben oder Bedrucken von Polyester-Wolle-Mischungen in textiler Form.